Europäisches Patentamt

European Patent Office

Office européen des brevets

(11) Numéro de publication: **0 423 034 A1**

## (12) DEMANDE DE BREVET EUROPEEN

(21) Numéro de dépôt: **90402843.8**

(22) Date de dépôt: **11.10.90**

(51) Int. Cl.5: **B60J 7/10**

(30) Priorité: **13.10.89 FR 8913458**

(43) Date de publication de la demande:
**17.04.91 Bulletin 91/16**

(84) Etats contractants désignés:
**BE CH DE ES GB GR IT LI NL**

(71) Demandeur: **JOUBERT S.A.**
**B.P. 67 Champ De Clure**
**F-63600 Ambert(FR)**

(72) Inventeur: **Joubert, Thierry**
**12 rue du Midi**
**F-63600 Ambert(FR)**

(74) Mandataire: **Schrimpf, Robert et al**
**Cabinet Regimbeau 26, Avenue Kléber**
**F-75116 Paris(FR)**

(54) **Dispositif pour accrocher une bâche à un support et son application aux bâches de véhicules.**

(57) L'invention concerne un dispositif pour accrocher une bâche à un support.

Le dispositif comprend une pluralité de pinces à fixer de place en place sur un bord de la bâche. La figure montre une pince constituée de deux branches (1,1′) articulées l'une à l'autre par une charnière (2), de façon à pouvoir être rabattues l'une contre l'autre en pinçant entre elles le bord de la bâche, ces deux branches comportant des moyens de fixation (3,4) coopérant pour l'autoblocage des deux branches rabattues l'une contre l'autre et comportant des évidements (9,9′) pour constituer un passage traversant la pince pour recevoir un élément de liaison de la pince au support.

L'invention s'applique notamment à la fixation d'une bâche à la ridelle d'un camion.

FIG.1

L'invention concerne la fixation d'une bâche et elle s'applique notamment à la fixation d'une bâche sur la ridelle d'un camion.

La façon la plus courante de fixer une bâche sur un camion est de faire passer un cordon élastique d'une part dans des oeillets prévus sur la bâche et, d'autre part, dans des pontets qui sont fixés sur l'une des ridelles de la carosserie.

La présente invention vise à fournir un dispositif permettant de s'affranchir de la pose des oeillets ainsi éventuellement que de celle des pontets.

On y parvient, selon l'invention, au moyen d'un dispositif qui comprend une pluralité de pinces à fixer de place en place sur un bord de la bâche, chaque pince étant constituée de deux branches articulées l'une à l'autre par une charnière de façon à pouvoir être rabattues l'une contre l'autre en pinçant entre elles le bord de la bâche, ces deux branches comportant des moyens de fixation coopérant pour l'auto-blocage des deux branches ainsi rabattues et comportant des évidements coopérant pour constituer un passage traversant la pince pour le montage d'un élément de liaison audit support.

Dans une réalisation préférée, la pince est constituée de deux plaquettes en matière plastique, par exemple en polyamide, venant de moulage avec, entre elles, une partie de liaison amincie qui constitue une charnière.

De préférence, les moyens de fixation comprennent des parties à presser l'une contre l'autre pour réaliser l'auto-blocage des deux branches, ces parties comprenant, par exemple, des bossages et des creux coopérant par effet de forme pour que les bossages soient retenus dans les creux.

On décrira ci-après deux réalisations d'un dispositif conforme à la présente invention, en référence aux figures du dessin joint sur lequel :
- la figure 1 est une vue en plan d'un premier mode de réalisation d'une pince, celle-ci étant représentée à l'état entièrement ouvert ;
- la figure 2 est une coupe de la pince de la figure 1 dans un plan transversal à la charnière ;
- la figure 3 est une vue de la pince fermée sur un bord de la bâche dans un plan transversal à la charnière ;
- la figure 4 est une vue de la pince de la figure 3, le plan de vue étant parallèle à la charnière ;
- la figure 5 est une vue comparable à celle de la figure 3 mais où l'on voit le crochet fixé au câble ;
- la figure 6 représente une variante de réalisation de la pince, la figure étant comparable à celle de la figure 1 mais limitée à l'une des branches de la pince ;
- la figure 7 est une vue de la pince de la figure 6 en place sur le bord de la bâche et en prise avec un pontet de la ridelle de la carosserie du camion, le plan de vue étant parallèle à la charnière de la pince, et
- la figure 8 est une coupe de la pince de la figure 6 par un plan perpendiculaire à la charnière de la pince.

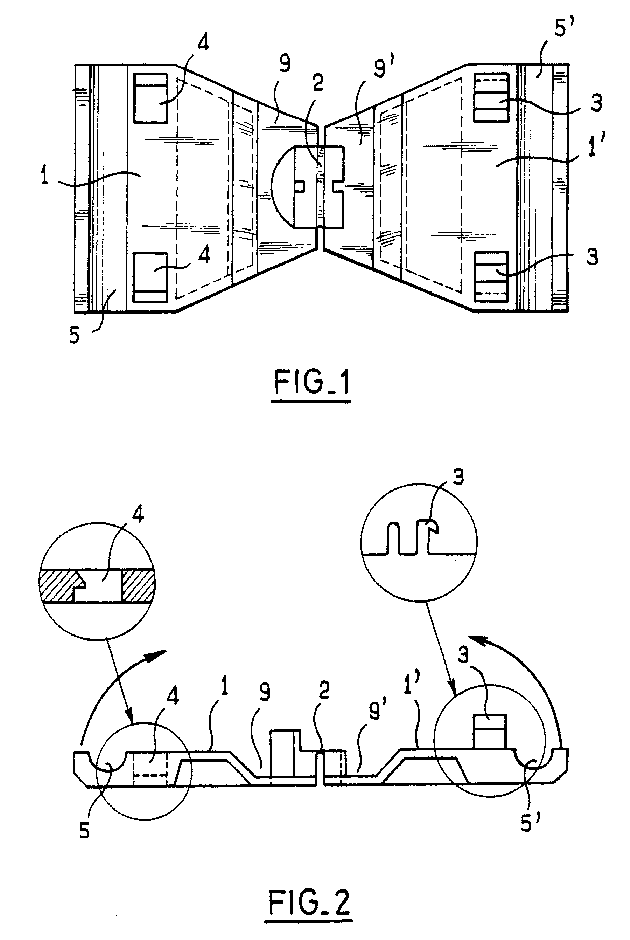

La pince représentée sur les figures 1 à 3 est constituée de deux plaquettes 1,1' articulées l'une à l'autre par un bord commun 2 constituant une charnière. De fait, les deux plaquettes viennent ensemble de fabrication par moulage d'une matière plastique, par exemple de polyamide, ainsi que la charnière qui est constituée par un amincissement de la paroi de liaison entre les deux plaquettes.

Des bossages 3 et des creux 4 sont répartis sur les plaquettes de façon que les bossages pénètrent dans les creux, lorsque la pince est fermée par rabattement d'une plaquette sur l'autre autour de la charnière, les bossages pénétrant à force dans les creux et y étant retenus par effet de forme, ce qui assure le blocage de la pince à l'état fermé.

Il est inutile de décrire plus en détail les formes qui permettent un blocage par effet de forme car ce type de blocage est bien connu de l'homme de métier dans les pièces en matière plastique. Par exemple, l'un des bossages est un appendice qui comporte un rebord qui vient en prise par en-dessous avec une paroi d'un creux. On a représenté par des encadrés, sur la figure 2, la coupe d'un bossage 3 et la coupe d'un creux 4.

Selon une autre particularité de ce mode de réalisation, chaque plaquette comporte à son extrémité éloignée de la charnière, une gorge 5,5' qui est parallèle à la charnière et, lorsque la pince est fermée, ces deux gorges 5,5' se trouvent en vis-à-vis l'une de l'autre et coopèrent pour constituer un passage 6 qui traverse la pince de part en part parallèlement à la charnière 2.

En variante, ce passage pourrait être fourni par l'une seulement des deux plaquettes.

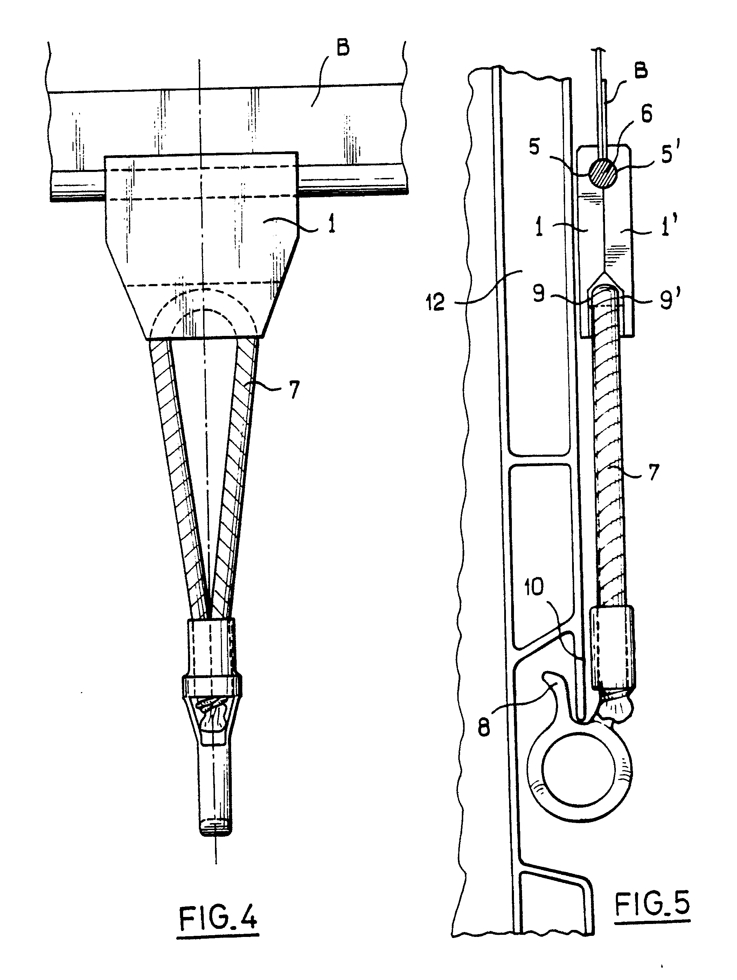

Ce passage est destiné à recevoir un élément solidaire du bord de la bâche B, cet élément étant par exemple un câble ou similaire soudé dans la bâche, pour retenir cet élément prisonnier lorsque la pince est fermée, comme on le voit sur la figure 3.

Cet élément constitue une sécurité pour assurer la retenue du bord de la bâche dans la pince.

L'invention n'est pas limitée à une forme ou nature d'élément particulière et, dans certains cas, cet élément pourrait d'ailleurs être considéré comme superflu.

Selon une autre caractéristique de ce mode de réalisation, la pince comporte des moyens pour que la fermeture de la pince rende prisonnière une boucle à laquelle est attaché un élément de liaison à la ridelle du camion.

Cette boucle est, par exemple, formée par un câble élastique 7 solidaire d'un crochet 8 ou autre pièce d'accrochage.

Les moyens pour constituer le passage du câble sont par exemple des gorges 9,9' prévues sur les plaquettes à proximité de la charnière et qui coopèrent pour constituer le passage du câble 7 qui forme une boucle autour de la charnière 2.

Avantageusement, la ridelle du camion peut être munie d'un profilé 10 qui présente un bord sur lequel peut venir en prise par en-dessous le crochet 8 fixé au câble 7, lui-même formant une boucle prisonnière de la pince.

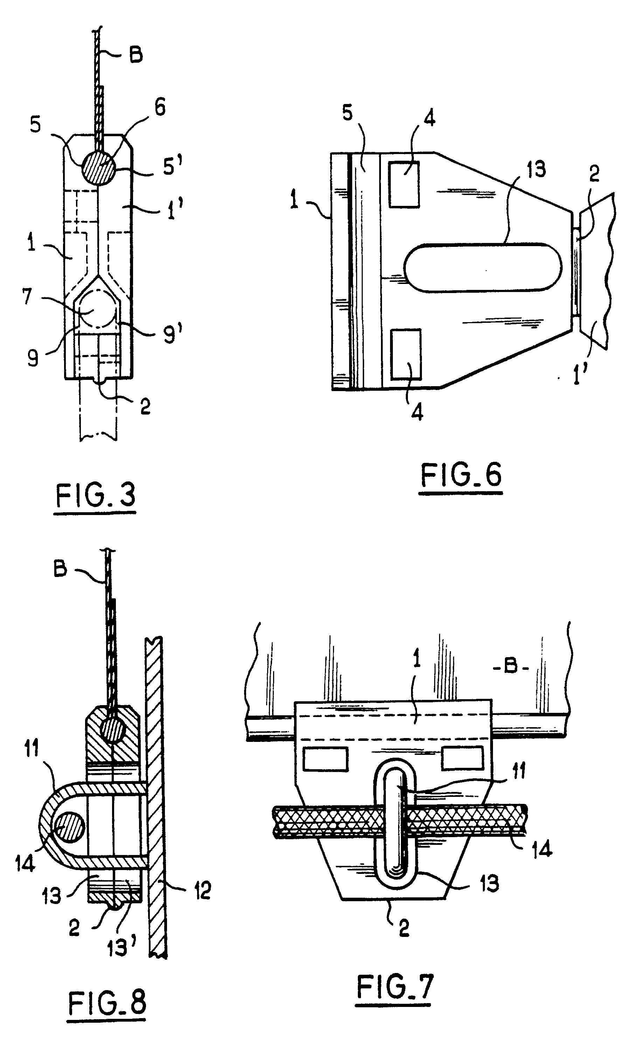

Les figures 6 à 8 sont relatives à une variante de réalisation où la pince est destinée à venir en prise avec des pontets 11 fixés de place en place sur la ridelle 12 du camion.

A cette fin, chaque plaquette de la pince comporte une fenêtre 13,13' qui traverse la plaquette selon une direction perpendiculaire à la charnière et les deux fenêtres qui se trouvent l'une contre l'autre lorsque la pince est à l'état fermé coopèrent pour constituer ensemble un passage pour un pontet 11 qui traverse donc la pince.

Un câble 14 peut être enfilé de proche en proche dans l'ensemble des pontets pour verrouiller les pinces sur les pontets.

L'invention n'est pas limitée aux réalisations qui ont été décrites ni à l'application qui a été décrite.

## Revendications

1. Dispositif pour accrocher une bâche à un support, qui comprend une pluralité de pinces à fixer de place en place sur un bord de la bâche, chaque pince étant constituée de deux branches (1,1') articulées l'une à l'autre par une charnière (2), de façon à pouvoir être rabattues l'une contre l'autre en pinçant entre elles le bord de la bâche, ces deux branches comportant des moyens de fixation (3,4) coopérant pour l'autoblocage des deux branches rabattues l'une contre l'autre et comportant des évidements (9,9' ; 13,13') coopérant pour constituer un passage traversant la pince pour recevoir un élément (7,11) de liaison de la pince audit support.

2. Dispositif selon la revendication 1, caractérisé en ce que lesdits moyens de fixation comprennent des parties (3,4) à presser l'une contre l'autre pour réaliser la fixation.

3. Dispositif selon la revendication 2, caractérisé en ce que lesdites parties comprennent des bossages (3) et des creux (4) coopérant par effet de forme pour que les bossages soient retenus dans les creux.

4. Dispositif selon l'une des revendications précédentes, caractérisé en ce qu'il comprend un élément (6) solidaire de la bâche (B) et un logement (5,5') formé dans la pince pour recevoir cet élément et le retenir prisonnier lorsque la pince est fermée sur la bâche.

5. Dispositif selon la revendication 4, caractérisé en ce que ledit élément est un câble (6) ou similaire soudé dans la bâche et en ce que ledit logement est une gorge traversante (5,5') formée dans l'une ou dans chacune des deux branches (1,1'), et s'étendant selon une direction parallèle à la charnière.

6. Dispositif selon l'une des revendications précédentes, caractérisé en ce que ledit élément de liaison (7) forme une boucle autour de la charnière de la pince.

7. Dispositif selon la revendication 6, caractérisé en ce que ledit élément de liaison est un câble élastique.

8. Dispositif selon l'une des revendications précédentes, caractérisé en ce que ledit élément de liaison (7) est solidaire d'un crochet (8) apte à venir en prise avec ledit support.

9. Dispositif selon la revendication 8, caractérisé en ce que ledit support (12) est muni d'un profilé (10) linéaire pour venir en prise avec le crochet (8).

10. Dispositif selon l'une des revendications précédentes, caractérisé en ce que ladite pince comporte dans chaque branche (1,1') une fenêtre (13,13'), les deux fenêtres coopérant lorsque la pince est fermée pour constituer un passage traversant pour un pontet (11) solidaire du support (12), le dispositif comportant en outre des moyens de verrouillage (14) de la pince sur le pontet.

11. Dispositif selon la revendication 10, caractérisé en ce que ce moyen de verrouillage est un câble (14) qui passe dans l'ensemble des pontets.

12. Dispositif selon l'une des revendications 1 à 11, caractérisé en ce que les branches (1,1') sont en forme de plaquettes.

13. Dispositif selon l'une des revendications 1 à 12, caractérisé en ce que les deux branches (1,1') sont venues ensemble de moulage avec une paroi de liaison amincie pour constituer la charnière (2).

14. Application d'un dispositif selon l'une des revendications 1 à 13 à la fixation d'une bâche sur un camion.

FIG_1

FIG_2

FIG.4

FIG.5

FIG. 3

FIG. 6

FIG. 8

FIG. 7

Office européen
des brevets

**RAPPORT DE RECHERCHE
EUROPEENNE**

Numéro de la demande

**EP 90 40 2843**

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-U-8 413 309 (SEYBOLD)<br>* page 9, ligne 11 - page 10, ligne 7; figures 2, 3 *<br>– – – | 1,4-7,12 | B 60 J<br>7/10 |
| X | DE-U-7 802 112 (NICKES SCHÄFER)<br>* revendications 1, 2; figures 1, 2 *<br>– – – | 1,10,11 | |
| A | DE-C-1 079 803 (METZ & CO)<br>– – – – – | | |

| | | | DOMAINES TECHNIQUES RECHERCHES (Int. Cl.5) |
|---|---|---|---|
| | | | B 60 J |

Le présent rapport de recherche a été établi pour toutes les revendications

| Lieu de la recherche | Date d'achèvement de la recherche | Examinateur |
|---|---|---|
| Berlin | 10 janvier 91 | LUDWIG H J |